# EUROPÄISCHE PATENTSCHRIFT

(11) **EP 2 961 894 B1**
(45) Veröffentlichungstag und Bekanntmachung des Hinweises auf die Patenterteilung: **25.10.2017**
(21) Anmeldenummer: 13805773.2
(22) Anmeldetag: 03.12.2013
(51) Int. Cl.: E03C 1/04, E03C 1/08, F16K 3/08, F16K 31/00

(54) **SANITÄRER DURCHFLUSSMENGENREGLER**
SANITARY WATER FLOW REGULATOR
REGULATEUR DE DEBIT SANITAIRE

(30) Priorität: 29.01.2013 DE 202013000860 U
(43) Veröffentlichungstag der Anmeldung: 06.01.2016
(73) Patentinhaber: Neoperl GmbH, 79379 Müllheim (DE)
(72) Erfinder: SCHÜRLE, Holger, 79379 Müllheim (DE); TEMPEL, Marc, 79111 Freiburg (DE)
(74) Vertreter: Börjes-Pestalozza, Henrich
(86) Internationale Anmeldenummer: PCT/EP2013/003640
(87) Internationale Veröffentlichungsnummer: WO 2014/117793

(56) Entgegenhaltungen:
- DE-A1-102006 026 059
- US-A- 4 775 101
- US-A- 5 211 300

## Beschreibung

Die Erfindung betrifft ein sanitäres Einbauteil, das einen Durchströmungsweg bildet, in dem eine Funktionseinheit angeordnet ist, die ein Durchströmbauteil hat, welches wenigstens eine Durchströmöffnung aufweist, und wobei im Durchströmungsweg wenigstens ein Abdeckelement angeordnet ist, mit welchem die wenigstens eine Durchströmöffnung wenigstens teilweise verschließbar ist, wobei an das wenigstens eine Abdeckelement eine temperatursensitive Antriebseinheit angekoppelt ist, mit welcher das wenigstens eine Abdeckelement zwischen einer die wenigstens eine Durchströmöffnung öffnenden Position und einer die wenigstens eine Durchströmöffnung zumindest teilweise verschließenden Position verstellbar ist, wobei das wenigstens eine Abdeckelement quer zu einer verlaufsrichtung der wenigstens einen Durchströmöffnung verstellbar angeordnet ist, wobei das wenigstens eine Abdeckelement an einem Abdeckbauteil ausgebildet ist, welches relativ zu dem Durchströmbauteil drehbar und/oder verschiebbar gelagert ist, und wobei das Abdeckbauteil wenigstens eine Durchströmungsgegenöffnung aufweist, welche in der ersten Position mit der wenigstens einen Durchströmöffnung fluchtet und/oder einen Abschnitt des Durchströmungswegs bildet.
Derartige Einbauteile sind bekannt und werden zu unterschiedlichsten Funktionen eingesetzt, beispielsweise als Strahlregler mit und ohne Belüftungsfunktion, als Strahlformer, als Drossel oder als Mengenregler. Es besteht häufig der Wunsch, für unterschiedliche Wassertemperaturen ein unterschiedliches Funktionsverhalten zu realisieren.

In der DE 10 2006 026 059 A ist ein Durchflussventil zur temperaturabhängigen Durchleitung eines flüssigen oder gasförmigen Mediums, insbesondere Wasser, mit zwei gegeneinander wirkenden Verschlusselementen und einem Stellelement vorbeschrieben. Abhängig von der jeweiligen Temperatur des Mediums wird eine Veränderung der relativen Position beider Verschlusselemente zueinander bewirkt. Das Durchflussventil dient dabei insbesondere als Verbrühschutz, da es ab einer bestimmten Wassertemperatur in den geschlossenen Zustand übergeht. Bei dem aus DE 10 2006 026 059 A vorbekannten Durchflussventil ist lediglich ein einziger Durchströmungsweg vorgesehen, der bei Erreichen eines bestimmten Temperaturschwellenwertes unter Umständen vollständig geschlossen wird.

Aus der US 5 211 200 A ist bereits ein Sicherheitsventil für Babyflaschen vorbekannt, das im wesentlichen aus zwei Teilen besteht, wobei ein erster äußerer, als Kappe ausgeformter Teil mehrere Durchströmöffnungen aufweist, während ein zweiter, innerer Teil ebenfalls mehrere identisch angeordnete Durchströmöffnungen hat, die im geöffneten Zustand des Ventils deckungsgleich unter den Durchströmöffnungen der äußeren Kappe vorgesehen sind, so dass sie einen Durchströmungsweg für die Flüssigkeit bilden. Sobald jedoch eine kritische Temperatur einer in der Flasche aufbewahrten Flüssigkeit überschritten ist, die beispielsweise eine Verbrühung des Kindes hervorrufen könnte, ist vorgesehen, dass das innere Teil relativ zum äußeren Teil anhand mehrerer temperatursensitiver Federn derart verdreht wird, dass die Durchströmöffnungen nicht mehr deckungsgleich übereinanderliegen und somit kein durchgängiger Durchströmungsweg zwischen dem äußeren und dem inneren Teil geöffnet ist. Dadurch soll keine Flüssigkeit aus dem Inneren der Flasche austreten und das Kind kann sich daran nicht verbrühen.

Es besteht nun die Aufgabe, ein sanitäres Einbauteil zu schaffen, das sich bei unterschiedlichen Wassertemperaturen durch ein unterschiedliches Funktionsverhalten auszeichnet.

Die erfindungsgemäße Lösung dieser Aufgabe besteht bei dem sanitären Einbauteil der eingangs erwähnten Art insbesondere darin, dass die wenigstens eine Durchströmöffnung und die wenigstens eine Durchströmgegenöffnung in der ersten Position einen Bypass zu einem Hauptströmungsweg der Funktionseinheit bildet.

Bei dem erfindungsgemäßen Einbauteil ist das wenigstens eine Abdeckelement quer zu einer Verlaufsrichtung der wenigstens einen Durchströmöffnung verstellbar angeordnet. Dabei wird eine Variante bevorzugt, in welcher das Abdeckelement quer in einem Winkel von 90° zur Verlaufsrichtung der wenigstens einen Durchströmöffnung verstellbar angeordnet ist. Andere Winkel realisieren jedoch auch die Vorteile der Erfindung zumindest zum Teil. Die Erfindung weicht somit von früheren Lösungen in der Hinsicht ab, dass das Abdeckelement nicht in Verlaufsrichtung der Durchströmöffnung verstellbar, beispielsweise in die Durchströmöffnung hinein oder aus dieser heraus, ist, sondern quer dazu. Von Vorteil ist dabei, dass eine Kraft zur Verstellung des Abdeckelements quer zur Verlaufsrichtung der Durchströmöffnung entwickelt werden muss, so dass diese Verstellkraft zumindest nicht die volle Größe eines in der Durchströmöffnung aufgrund der Wasserströmung aufgebauten Drucks überwunden werden muss. Vielmehr ist erreichbar, dass dieser Druck durch eine Lagerung oder Abstützung des Abdeckelements quer zum Verstellweg zumindest anteilig aufnehmbar ist. Im Fall einer Verstellbarkeit senkrecht zur Verlaufsrichtung der Durchströmöffnung ist sogar erreichbar, dass der Druck der Strömung vollständig durch eine Lagerung des verstellbaren Abdeckelements aufnehmbar ist. Somit können Materialien eingesetzt werden, die eine verringerte temperaturabhängige Kraftentwicklung haben. Ferner können kleinere und damit schwächere Antriebseinheiten eingesetzt werden. Dies vergrößert den Freiraum bei der Konstruktion eines sanitären Einbauteils beträchtlich. Da das Antriebselement schraubenfederförmig oder ringfederförmig oder spiralfederförmig ausgebildet ist und da das Antriebselement aufgrund der Eigenelastizität des temperatursensitiven Materials wie eine Schraubenfeder oder eine Ringfeder oder eine Spiralfeder federnd ausgebildet werden kann, kann das Antriebselement auch Fertigungstoleranzen aufnehmen. Dabei ist von Vorteil, dass bei Formänderungen des temperatursensitiven Materials gerichtete Verstellkräfte in der gewünschten Richtung einfach erzeugbar sind.

Da das wenigstens eine Abdeckelement erfindungsgemäß an einem Abdeckbauteil ausgebildet ist, welches relativ zu dem Durchströmbauteil drehbar gelagert ist, hat eine Drehbewegung einen geringen Platzbedarf. Alternativ oder zusätzlich kann vorgesehen sein, dass das wenigstens eine Abdeckelement an einem Abdeckbauteil ausgebildet ist, welches relativ zu dem die wenigstens eine Durchströmöffnung bildenden Durchströmbauteil verschiebbar gelagert ist. Von Vorteil ist dabei, dass unrunde Querschnitte besser ausnutzbar sind. Es sind auch Kombinationen einer Drehbarkeit und einer Verschiebbarkeit mit Vorteil einsetzbar. Da das Abdeckbauteil wenigstens eine Durchströmgegenöffnung aufweist, welche in der ersten Position mit der wenigstens einen Durchströmöffnung fluchtet und/oder einen Abschnitt des Durchströmwegs bildet, ist auf einfache Weise eine die Durchströmöffnung öffnende Position geschaffen, wenn die Durchströmöffnung mit der Durchströmgegenöffnung in der ersten Position kommuniziert, um eine Strömung entlang des Durchströmungswegs zu ermöglichen. Dabei bildet die wenigstens eine Durchströmöffnung einen Bypass zu einem Hauptströmungsweg der Funktionseinheit. Von Vorteil ist dabei, dass eine Strömungswirkung der Funktionseinheit im Hauptströmungsweg temperaturabhängig deaktivierbar oder zumindest verminderbar ist. Beispielsweise kann/können in diesem Hauptströmungsweg ein Strahlregler und/oder ein Mengenregler und/oder eine Drossel angeordnet sein.

Besonders günstig ist es, wenn das wenigstens eine Abdeckelement die wenigstens eine Durchströmöffnung in der zumindest teilweise verschließenden Position vollständig verschließt.

Bei einer Ausgestaltung der Erfindung kann vorgesehen sein, dass das wenigstens eine Abdeckelement an dem Durchströmbauteil anliegt und/oder abgestützt ist. Von Vorteil ist dabei, dass Kräfte, die auf das Abdeckelement aufgrund einer Strömung in der Durchströmöffnung wirken, aufnehmbar sind. Somit können derartige Kräfte über ein Anliegen und/oder Abstützen an dem Durchströmbauteil abgeleitet werden, ohne dass die Antriebseinheit belastet wird. Die Antriebseinheit kann somit geringer dimensioniert werden, wodurch das erforderliche Baumaß des sanitären Einbauteils insgesamt und der erforderliche Materialeinsatz verringerbar sind. Von Vorteil ist weiter, dass das Durchströmbauteil das Abdeckelement führt, um die Verstellbewegung quer zur Verlaufsrichtung der Durchströmöffnung zu ermöglichen.

Bei einer Ausgestaltung der Erfindung kann vorgesehen sein, dass die Antriebseinheit ein temperatursensitives Material hat. Von Vorteil ist dabei, dass eine Temperaturveränderlichkeit auf einfache Weise realisierbar ist. Vorzugsweise ist das temperatursensitive Material ein temperaturabhängig formveränderliches Material. Somit kann erreicht werden, dass eine Temperaturänderung auf einfache Weise in eine Verstellbewegung umsetzbar ist, die durch die Formveränderung angetrieben ist. Besonders günstig ist es dabei, wenn das formveränderliche Material ein Bimetall-Material oder ein Material mit Formgedächtnis ist. Hierbei ermöglicht beispielsweise ein Bimetall-Material eine kontinuierliche Verstellbewegung über einen Temperaturbereich, während ein Material mit Formgedächtnis eine schlagartige Formveränderung und somit ein schlagartiges Verstellen bei Überschreiten einer Schwellentemperatur, welche einen Phasenübergang des Materials charakterisiert, erreichbar macht. Je nach Anwendungsfall kann somit zwischen unterschiedlichem Schaltverhalten ausgewählt werden.

Bei einer Ausgestaltung der Erfindung kann vorgesehen sein, dass die Durchströmöffnung axial ausgerichtet ist. Von Vorteil ist dabei, dass eine Umlenkung der Strömungsrichtung im sanitären Einbauteil durch die Ausrichtung der Durchströmöffnung vermeidbar ist. Hierbei oder allgemein kann vorgesehen sein, dass eine Durchströmgegenöffnung, beispielsweise die bereits erwähnte Durchströmgegenöffnung, axial ausgerichtet ist. Von Vorteil ist dabei, dass eine Ablenkung der Strömungsrichtung durch die Durchströmgegenöffnung vermeidbar ist. Bei einer Kombination einer axial ausgerichteten Durchströmöffnung und einer ebenfalls axial ausgerichteten Durchströmgegenöffnung kann somit erreicht werden, dass der gebildete Abschnitt des Durchströmweges einen möglichst geringen Strömungswiderstand darstellt.

Besonders günstig ist es dabei, wenn die Durchströmöffnung und die Durchströmgegenöffnung übereinstimmende Querschnitte aufweisen. Somit kann erreicht werden, dass in einem von der Durchströmöffnung und der Durchströmgegenöffnung gebildeten Abschnitt des Durchströmungswegs möglichst geringe Beeinträchtigungen des Strömungsverhaltens, beispielsweise durch Verwirbelungen, bewirkt werden.

Bei einer Ausgestaltung der Erfindung kann vorgesehen sein, dass ein Anordnungsmuster von Durchströmgegenöffnungen deckungsgleich zu einem Anordnungsmuster von Durchströmöffnungen ausgebildet ist. Von Vorteil ist dabei, dass mehrere Durchströmöffnungen und mehrere Durchströmgegenöffnungen verwendbar sind, welche in der öffnenden Position, beispielsweise in der bereits erwähnten ersten Position, gemeinsam in paarweise fluchtende Anordnung bringbar sind.

Bei einer Ausgestaltung der Erfindung kann vorgesehen sein, dass die wenigstens eine Durchströmöffnung radial außerhalb eines, beispielsweise des bereits erwähnten, Hauptströmungswegs der Funktionseinheit angeordnet ist. Von Vorteil ist dabei, dass entlang eines großen Umfangs viel Platz für die Ausbildung von Durchströmöffnungen verwendbar ist. Vorzugsweise können mehrere Durchströmöffnungen entlang des erwähnten Umfangs, besonders vorzugsweise gleichmäßig entlang des erwähnten Umfangs, angeordnet sein. Auf diese Weise ist die effektive Querschnittsfläche eines Bypasses vergrößerbar.

Soweit nichts anderes gesagt wird, sind die Begriffe "radial", "axial", und "Umfangsrichtung" in Bezug auf eine Längsachse des sanitären Einbauteils gebraucht. Diese Längsachse kann beispielsweise durch die Verbindung zwischen einem Einlauf und einem Auslauf des sanitären Einbauteils charakterisiert werden.

Alternativ oder zusätzlich kann vorgesehen sein, dass die wenigstens eine Durchströmöffnung radial innerhalb eines, insbesondere des bereits erwähnten, Hauptströmungswegs der Funktionseinheit angeordnet ist. Von Vorteil ist dabei, dass eine größere nutzbare Querschnittsfläche für den Hauptströmungsweg der Funktionseinheit nutzbar ist.

Bei einer Ausgestaltung der Erfindung kann vorgesehen sein, dass ein temperatursensitives Material, beispielsweise das bereits erwähnte temperatursensitive Material, der Antriebseinheit in einem, beispielsweise dem bereits erwähnten, Hauptströmungsweg der Funktionseinheit angeordnet ist. Von Vorteil ist dabei, dass das Antriebselement durch eine Temperaturänderung im Hauptströmungsweg ansteuerbar ist.

Hierbei oder allgemein kann vorgesehen sein, dass das temperatursensitive Material der Antriebseinheit ringförmig ausgebildet oder geführt ist. Von Vorteil ist dabei, dass eine Drehbewegung des bereits erwähnten Abdeckbauteils durch eine Formveränderung des temperatursensitiven Materials einfach erreichbar ist. Alternativ ist das temperatursensitive Material auch mit anderen Formen, beispielsweise Platten- oder Balkenformen, ausbildbar.

Bei einer Ausgestaltung der Erfindung kann vorgesehen sein, dass die wenigstens eine Durchströmöffnung als Schlitz ausgebildet ist. Von Vorteil ist dabei, dass ein Verschließen mit einem Abdeckelement durch eine Verstellbewegung quer zu einer Längsrichtung des Schlitzes mit einem kurzen Verstellweg erreichbar ist. Vorzugsweise ist der Schlitz radial ausgerichtet, um eine Verstellbewegung als Teil einer Drehbewegung zu ermöglichen. Auf diese Weise sind entlang eines Umfangs mehrere, insbesondere viele, Durchströmöffnungen ausbildbar.

Bei einer Ausgestaltung der Erfindung kann vorgesehen sein, dass eine Rückstellfeder vorhanden ist, deren Kraftentwicklung der temperatursensitiven Antriebseinheit entgegengerichtet ist. Von Vorteil ist dabei, dass, beispielsweise bei einer Abkühlung des strömenden Wassers, eine Rückstellung des Abdeckelements in die Ausgangsposition, beispielsweise in die öffnende Position oder die zumindest teilweise, insbesondere vollständig, verschließende Position, erreichbar ist.

Bei einer Ausgestaltung der Erfindung kann vorgesehen sein, dass eine Rückstellfeder, beispielsweise die bereits erwähnte Rückstellfeder, als Schraubenfeder oder als Ringfeder oder als Spiralfeder oder als Torsionsfeder ausgebildet ist. Von Vorteil ist dabei, dass die benötigten Rückstellkräfte einfach entwickelbar sind. Schraubenfedern, Ringfedern und Spiralfedern bieten den Vorteil, dass eine ringförmige Anordnung der Rückstellfeder erreichbar ist. Torsionsfedern bieten den Vorteil, dass Anordnungen der Rückstellfeder im Zentrum einer Drehbewegung möglich sind.

Bei einer Ausgestaltung der Erfindung kann vorgesehen sein, dass ein die wenigstens eine Durchströmöffnung bildendes Durchströmbauteil, beispielsweise das bereits erwähnte Durchströmbauteil, plattenförmig oder scheibenförmig ausgebildet ist. Von Vorteil ist dabei, dass ein geringer Platzbedarf für das Durchströmbauteil erreichbar ist. Alternativ oder zusätzlich kann vorgesehen sein, dass ein das Abdeckelement aufnehmendes Abdeckbauteil, beispielsweise das bereits erwähnte Abdeckbauteil, plattenförmig oder scheibenförmig ausgebildet ist. Von Vorteil ist dabei, dass für das Abdeckbauteil ein geringer Platzbedarf erforderlich ist. Besonders günstig ist eine Kombination eines plattenförmigen Durchströmbauteils und eines plattenförmigen Abdeckbauteils. Von Vorteil ist dabei, dass das Abdeckbauteil auf einfache Weise relativ zu dem Durchströmbauteil verstellbar ist.
Die Erfindung wird nun anhand von Ausführungsbeispielen näher beschrieben, ist aber nicht auf diese Ausführungsbeispiele beschränkt. Weitere Ausführungsbeispiele ergeben sich durch Kombination der Merkmale einzelner oder mehrerer Schutzansprüche untereinander und/oder mit einzelnen oder mehreren Merkmalen der Ausführungsbeispiele.

Es zeigt:
- Figur 1:: ein erfindungsgemäßes sanitäres Einbauteil in der öffnenden und der verschließenden Position in einer Ansicht auf die Abströmseite und in teilweise aufgeschnittener dreidimensionaler Schrägansicht,
- Figur 2:: das sanitäre Einbauteil gemäß Figur 1 in öffnender und in verschließender Position jeweils in Explosionsdarstellung,
- Figur 3:: ein weiteres erfindungsgemäßes sanitäres Einbauteil in öffnender und in verschließender Position in unterschiedlichen Ansichten,
- Figur 4:: das Einbauteil gemäß Figur 3 in öffnender und in verschließender Position jeweils in Explosionsdarstellung,
- Figur 5:: ein weiteres erfindungsgemäßes sanitäres Einbauteil mit ringfederförmiger Antriebseinheit in öffnender und in verschließender Position in unterschiedlichen Ansichten,
- Figur 6:: das sanitäre Einbauteil gemäß Figur 5 in öffnender und in verschließender Position jeweils in Explosionsdarstellung,
- Figur 7:: ein weiteres erfindungsgemäßes sanitäres Einbauteil mit einer Variante der Antriebseinheit in öffnender und in verschließender Position in unterschiedlichen Ansichten,
- Figur 8:: das Einbauteil gemäß Figur 7 in öffnender und in verschließender Position jeweils in Explosionsdarstellung,
- Figur 9:: ein weiteres erfindungsgemäßes sanitäres Einbauteil mit spiralfederförmiger Antriebseinheit in öffnender und in verschließender Position unterschiedlicher Ansichten,
- Figur 10:: das Einbauteil gemäß Figur 9 in öffnender und in verschließender Position jeweils in Explosionsdarstellung,
- Figur 11:: ein weiteres erfindungsgemäßes sanitäres Einbauteil mit einer Strahlreglungsfunktion in öffnender und in verschließender Position in unterschiedlichen Ansichten und
- Figur 12:: das sanitäre Einbauteil gemäß Figur 11 in öffnender und in verschließender Position jeweils in Explosionsdarstellung.

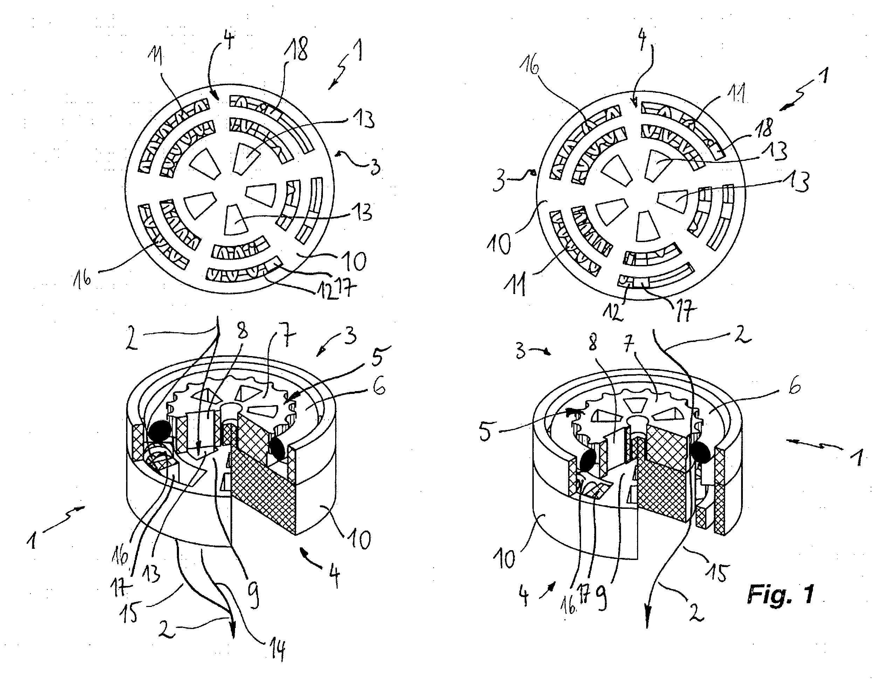

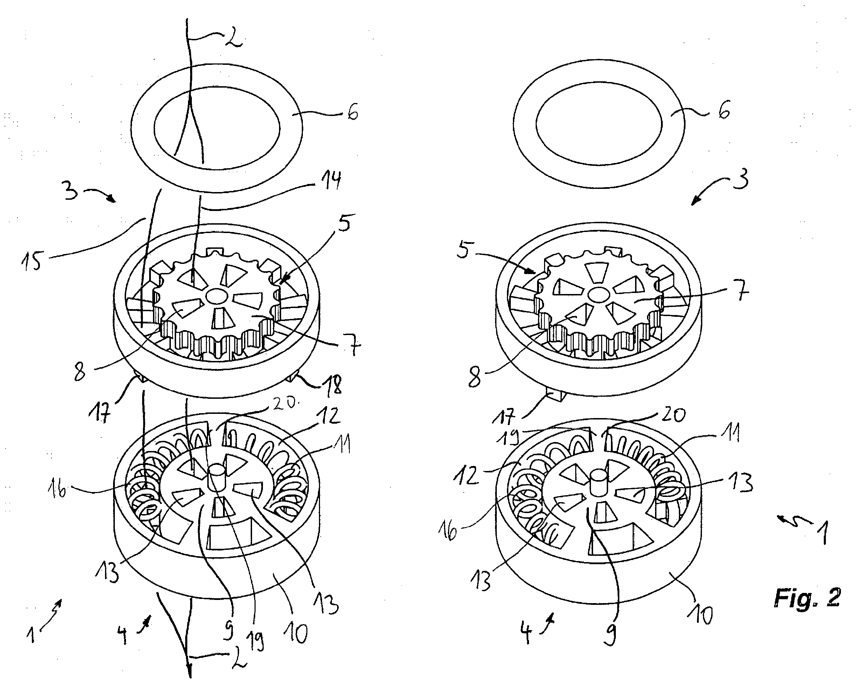

Figuren 1 und 2 zeigen ein im Ganzen mit 1 bezeichnetes, erfindungsgemäßes sanitäres Einbauteil in unterschiedlichen Ansichten und Verstellpositionen, die im Folgenden näher erläutert werden.

Das sanitäre Einbauteil 1 bildet einen Durchströmungsweg 2 aus, der zwischen einer Anströmseite 3 und einer Abströmseite 4 verläuft.

In den Durchströmungsweg 2 ist eine Funktionseinheit 5 angeordnet, beispielsweise der hier gezeigte, an sich bekannte Mengenregler. Die Funktionseinheit 5 ist zur Bildung des Mengenreglers in an sich bekannter Weise mit einem elastischen Ring 6 versehen.

Bei weiteren Ausführungsbeispielen sind andere Funktionseinheiten, beispielsweise Strahlregler, ausgebildet oder mit dem erwähnten Mengenregler kombiniert, um eine Funktionseinheit 5 zu bilden.

Die Funktionseinheit 5 hat ein Durchströmbauteil 7, in dem wenigstens eine Durchströmöffnung 8 ausgebildet ist.

Bei dem Ausführungsbeispiel gemäß Figur 1 und Figur 2 sind in dem Durchströmbauteil 7 fünf Durchströmöffnungen 8 augebildet. Bei weiteren Ausführungsbeispielen sind andere Anzahlen und/oder andere Formen der Durchströmöffnungen 8 realisiert.

Im Durchströmungsweg 2 ist wenigstens ein Abdeckelement 9 angeordnet, mit welchem die wenigstens eine Durchströmöffnung 8 verschließbar ist.

Figur 1 zeigt in der linken Zeichnungshälfte das Abdeckelement 9 in einer die wenigstens eine Durchströmöffnung 8 öffnenden Position, während die rechte Zeichnungshälfte von Figur 1 und Figur 2 das Abdeckelement 9 in einer die wenigstens eine Durchströmöffnung 8 verschließenden Position darstellt.

Hierbei zeigt Figur 1 das sanitäre Einbauteil in diesen Positionen jeweils in der oberen Zeichnungshälfte in einer Ansicht von unten auf die Abströmseite 4 und in der unteren Zeichnungshälfte in einer teilweise ausgeschnitten dreidimensionalen Schrägdarstellung.

Durch Vergleich der jeweils linken und rechten Zeichnungshälften ist ersichtlich, dass das Abdeckelement 9 zur Verstellung quer, hier im Winkel von 90°, zu einer Verlaufsrichtung der wenigstens einen Durchströmöffnung 8 bewegt wird.

Hierbei stützt sich das Abdeckelement 9 an dem Durchströmbauteil 7 ab.

Es ist ersichtlich, dass das Abdeckelement 9 an einem Abdeckbauteil 10 ausgebildet ist. Das Abdeckbauteil 10 ist relativ zu dem Durchströmbauteil 7 drehbar gelagert, so dass die erwähnte Verstellbewegung aus einer Drehbewegung des Abdeckbauteils 10 resultiert.

An das Abdeckelement 9 ist eine temperatursensitive Antriebseinheit 11 angekoppelt, mit welchem temperaturabhängig die Verstellbewegung ausführbar oder antreibbar ist.

In Figur 2 ist ersichtlich, dass das Antriebselement 11 schraubenfederförmig ausgebildet und in eine ringförmige oder ringsegmentförmige Aufnahme 12 eingelegt und in dieser geführt ist.

Die Antriebseinheit 11 besteht aus einem temperatursensitiven Material, beispielsweise einem Bimetall-Material oder einem Material mit Formgedächtnis, bzw. weist ein solches Material als Komponente auf. Die Antriebseinheit 11 verändert daher je nach Temperatur ihre Form.

Die Antriebseinheit 11 stützt sich an dem Abdeckbauteil 10 über das Abstützelement 20 ab. Die Antriebseinheit 11 beaufschlagt das Durchströmbauteil 7 über einen Mitnahmevorsprung 18, der hier als Mitnahmenocke ausgebildet ist. Die Antriebseinheit 11 ist somit zwischen dem Durchströmbauteil 7 und dem Abdeckbauteil 10 eingespannt.

Die schraubenfederförmige Ausgestaltung der Antriebseinheit 11 bei dem gezeigten Ausführungsbeispiel führt dazu, dass das Durchströmbauteil 7 und das Abdeckbauteil 10, zwischen denen die Antriebseinheit 11 eingespannt ist, relativ zueinander verdreht werden.

Hierbei kann das Durchströmbauteil 7 raumfest verbleiben und das Abdeckbauteil 10 gedreht werden, oder es kann das Abdeckbauteil 10 raumfest verbleiben, wodurch das Abdeckbauteil 7 gedreht wird, oder es kann eine Relativdrehung beider Bauteile 7, 10 gegeneinander ausgeführt werden. Die Mitnahmevorsprünge 17, 18 könnten somit je nachdem, welches Bauteil 7, 10 raumfest verbleibt, auch als Abstützelemente dienen, während die Abstützelemente 19, 20 dann Mitnahmevorsprünge bereitstellen.

Somit kann beispielsweise bei einer niedrigeren Temperatur, also einer Temperatur unter einem Temperaturschwellwert, die öffnende Position gemäß der linken Bildhälfte von Figur 1 und Figur 2 eingenommen sein, während bei einer höheren Temperatur, beispielsweise der Temperatur über dem erwähnten Temperaturschwellwert, die verschließende Position gemäß der rechten Bildhälfte von Figur 1 und Figur 2 eingenommen wird.

Bei weiteren Ausführungsbeispielen ist das Durchströmbauteil 10 gegenüber dem Abdeckbauteil 7 verschiebbar gelagert.

Das Abdeckbauteil 10 hat Durchströmgegenöffnungen 13. Aus den Figuren ist ersichtlich, dass die Zahl und Größe der Durchströmgegenöffnungen 13 jeweils auf die Zahl und Größe der Durchströmöffnungen 8 abgestimmt ist.

In der öffnenden Position gemäß der linken Zeichnungshälften von Figur 1 und Figur 2 fluchten die Durchströmgegenöffnungen 13 mit den Durchströmöffnungen 8 und bilden somit einen Abschnitt des Durchströmungswegs 2.

Hierbei sind die Durchströmöffnungen 8 und die Durchströmgegenöffnungen 13 axial in Bezug auf eine Längsachse des sanitären Einbauteils, welche durch das Drehzentrum der Verstellbewegung zwischen dem Durchströmbauteil 7 und dem Abdeckbauteil 10 gegeben ist, ausgerichtet.

Aus der teilweise aufgeschnittenen Darstellung in Figur 1 ist ersichtlich, dass die Durchströmöffnungen 8 und die Durchströmgegenöffnungen 13 übereinstimmende Querschnitte aufweisen. Es ist ferner ersichtlich, dass das Anordnungsmuster der Durchströmgegenöffnungen 13 deckungsgleich zu dem Anordnungsmuster der Durchströmöffnungen 8 ausgebildet ist.

In der öffnenden Position bilden die Durchströmöffnungen 8 einen Bypass 14 zu dem Hauptströmungsweg 15 der Funktionseinheit 5.

Somit wird die Funktionseinheit 5 kurzgeschlossen und daher zumindest teilweise deaktiviert.

In der verschließenden Position gemäß der rechten Zeichnungshälfte von Figur 1 und Figur 2 ist dieser Bypass 14 verschlossen, so dass nur der Hauptströmungsweg 15 als Durchströmungsweg 2 verbleibt.

Sind Zwischenzustände eingerichtet, in denen die Durchströmöffnungen 8 nur teilweise verschlossen sind, so ist eine Abstufung der Deaktivierung der Funktionseinheit 5 erreichbar.

In Figur 2 ist ersichtlich, dass die Durchströmöffnungen 8 radial innerhalb des Hauptströmungsweges 15 angeordnet sind.

Das temperatursensitive Material der Antriebseinheit 11 ist in dem Hauptströmungsweg 15 angeordnet, um eine gute thermische Anbindung an das durchströmende Wasser zu bilden.

Die Durchströmöffnungen 8 sind als radial verlaufende Schlitze ausgebildet, weisen also eine größere Länge in radialer Richtung auf, als die Breite in Umfangsrichtung der Durchströmöffnung 8.

Zur Rückstellung der Relativpositionen des Durchströmbauteils 7 und des Abdeckbauteils 10 zueinander ist eine Rückstellfeder 16 ausgebildet, die so angeordnet ist, dass sie der Kraftentwicklung des temperatursensitiven Materials der Antriebseinheit 11 entgegengerichtet ist.

Im dargestellten Ausführungsbeispiel ist die Rückstellfeder 16 als Schraubenfeder ausgebildet. Die Rückstellfeder 16 stützt sich an dem Abdeckbauteil 10 über ein Abstützelement 20 ab und beaufschlagt einen Mitnahmevorsprung 18 des Durchströmbauteils 7. Die Rückstellfeder 16 ist somit ebenfalls zwischen dem Durchströmbauteil 7 und dem Abdeckbauteil 10 eingespannt und wirkt der Antriebseinheit 1.1 entgegen.

Das Durchströmbauteil 7 und das Abdeckbauteil 10 sind jeweils platten- oder scheibenförmig ausgebildet und berühren sich mit ihren Seitenflächen, um sich abzustützen.

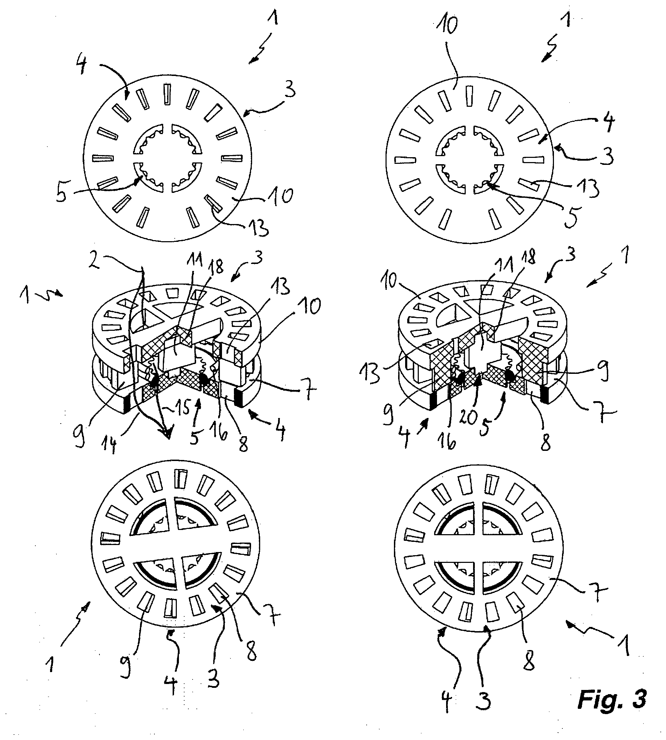

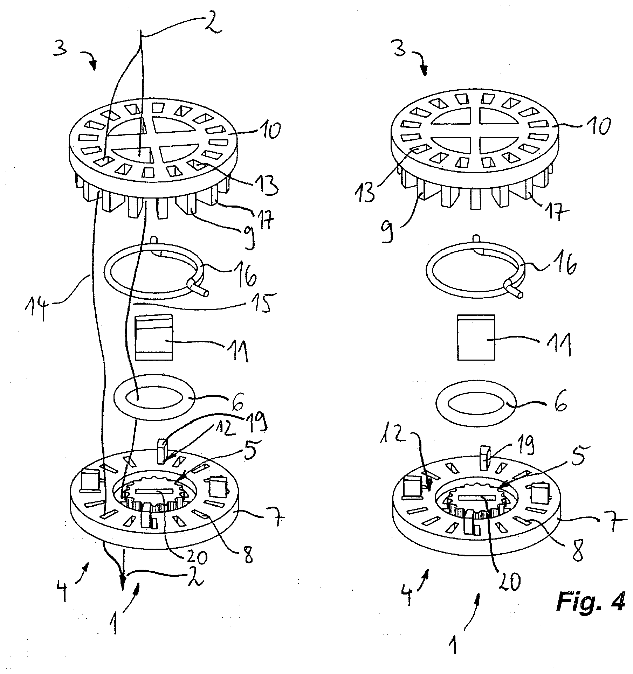

Figur 3 und Figur 4 zeigen unterschiedliche Ansichten eines weiteren erfindungsgemäßen sanitären Einbauteils 1. Konstruktiv und/oder funktionell zu dem Einbauteil 1 gemäß Figur 1 und 2 gleichartige oder identische Bauteil und Funktionseinheiten sind mit demselben Bezugszeichen bezeichnet und nicht noch einmal gesondert beschrieben. Die Ausführungen zu Figur 1 und 2 gelten somit zu Figur 3 und 4 entsprechend.

Das obere Drittel von Figur 3 zeigt eine Ansicht auf die Abströmseite 4, das mittlere Drittel eine teilweise aufgeschnittene dreidimensionale Schrägansicht und das untere Drittel eine Ansicht auf die Anströmseite 3. Links ist wieder die öffnende Position des Abdeckelements, rechts die verschließende Position gezeigt.

Das Ausführungsbeispiel gemäß Figur 3 und Figur 4 unterscheidet sich von dem Ausführungsbeispiel gemäß Figur 1 und Figur 2 dadurch, dass die Antriebseinheit 11 ein temperatursensitives Material hat, das torsionsfederförmig ausgebildet ist. Das temperatursensitive Material 11 ist dabei so geformt und gefertigt, dass eine Temperaturänderung zu einer Formänderung in Form einer Torsion der Antriebseinheit 11 führt.

Die Antriebseinheit 11 ist in ein schlitzförmiges Abstützelement 20 des Durchströmbauteils 7 eingesetzt und beaufschlagt einen Mitnahmevorsprung 18 an einer ebenfalls schlitzförmigen Ausnehmung am Abdeckbauteil 10.

Auf diese Weise wird die Verstellbewegung der Bauteile 7, 10 gegeneinander bewirkt. Somit können die Durchströmöffnungen 8 geöffnet (linke Zeichnungshälften) und durch die Abdeckelemente 9 verschlossen (rechte Zeichnungshälften) werden.

Das Ausführungsbeispiel gemäß Figur 3 und 4 unterscheidet sich von dem Ausführungsbeispiel gemäß Figur 1 und 2 ferner dadurch, dass die Funktionseinheit 9 radial innerhalb der Durchströmöffnungen 8 angeordnet ist.

Die Durchströmöffnungen 8 sind somit radial außerhalb des Hauptströmungswegs 15 angeordnet.

Die Rückstellfeder 16 ist bei dem gezeigten Ausführungsbeispiel als Ringfeder ausgebildet. Die Ringfeder 16 ist zwischen einem Abstützelement 19 am Durchströmbauteil 7 und einem Mitnahmevorsprung 17 am Abdeckbauteil 10 eingespannt.

Auch bei diesem Ausführungsbeispiel sind das Abdeckbauteil 10 und das Durchströmbauteil 7 ebenfalls jeweils platten- oder scheibenförmig ausgebildet. Im Unterschied zu dem vorangehenden Ausführungsbeispiel sind jedoch die Abdeckelemente 9 an den scheibenförmigen Grundkörper des Abdeckbauteils 10 angeformt, so dass die Durchströmöffnungen 8 von den Durchströmgegenöffnungen 13 in axialer Richtung beabstandet sind.

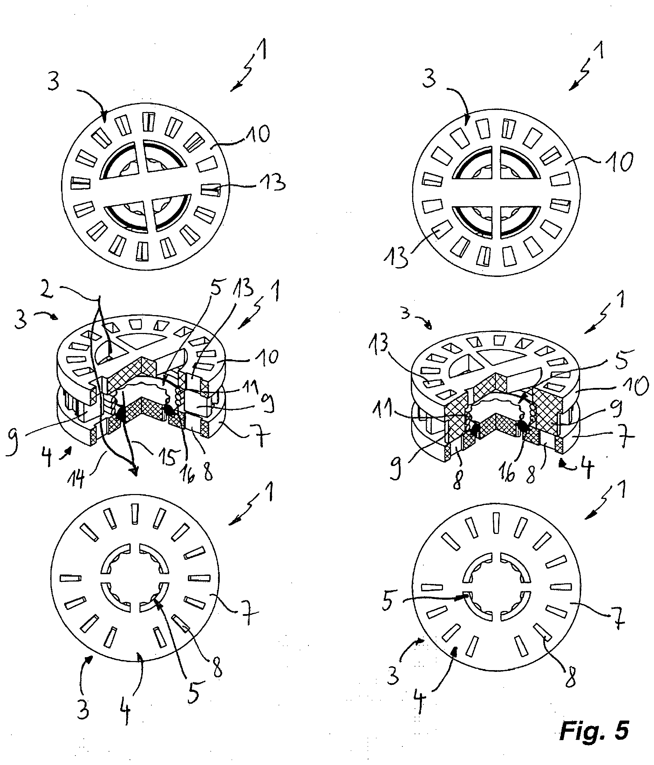

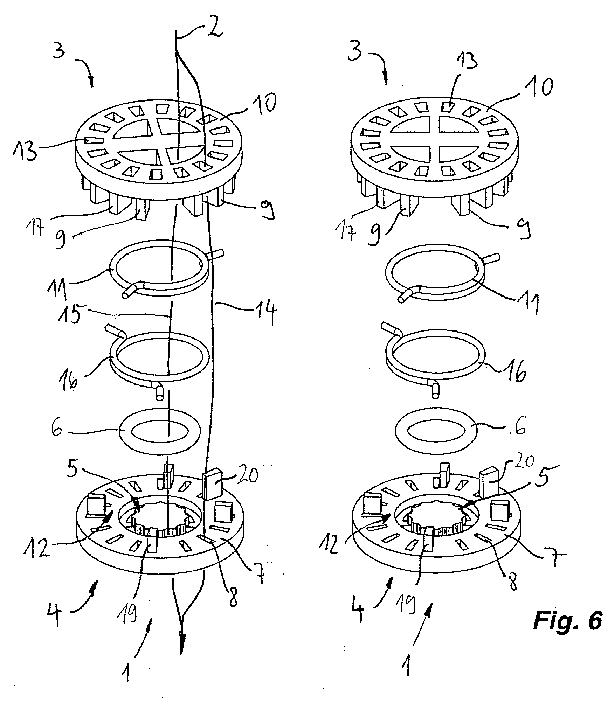

Figuren 5 und 6 zeigen ein weiteres erfindungsgemäßes Ausführungsbeispiel eines sanitären Einbauteils 1 in unterschiedlichen Ansichten.

Funktionell und/oder konstruktiv zu den vorangehenden Ausführungsbeispielen gleichartige oder identische Bauteile und Funktionseinheiten sind mit demselben Bezugszeichen bezeichnet und nicht noch einmal gesondert beschrieben. Die Ausführungen zu den Ausführungsbeispielen gemäß Figuren 1 bis 4 gelten daher zu Figur 5 und Figur 6 entsprechend. Die Anordnung der Ansichten entspricht den Figuren 3 und 4, wobei die Ansichten der Anströmseite 3 und der Abströmseite 4 vertauscht sind.

Das Ausführungsbeispiel gemäß Figur 5 und 6 unterscheidet sich von den vorangehenden Ausführungsbeispielen dadurch, dass die Antriebseinheit 11 ringfederförmig ausgebildet ist und den Hauptströmungsweg 15 ringförmig umschließt.

Die Rückstellfeder 16 und die Antriebseinheit 11 sind koaxial zueinander und axial nebeneinander angeordnet. Die Rückstellfeder 16 und die Antriebseinheit 11 weisen einen übereinstimmenden Radius auf, sind also koradial angeordnet. Die Antriebseinheit 11 ist zwischen einem Mitnahmevorsprung 18 des Abdeckbauteils 10 und einem Abstützelement 20, hier ein Abstützvorspung, des Durchströmbauteils 7 eingesetzt. Die Rückstellfeder 16 ist zwischen einem Mitnahmevorsprung 17 des Abdeckbauteils 10 und einem Abstützelement 19, hier als Abstützvorspung ausgebildet, des Durchströmbauteils 7 eingesetzt und wirkt der Antriebseinheit 11 entgegen.

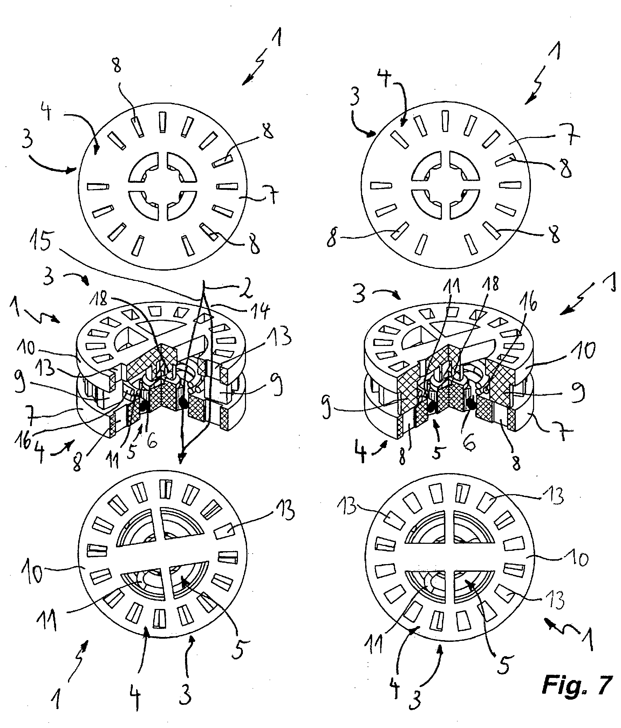

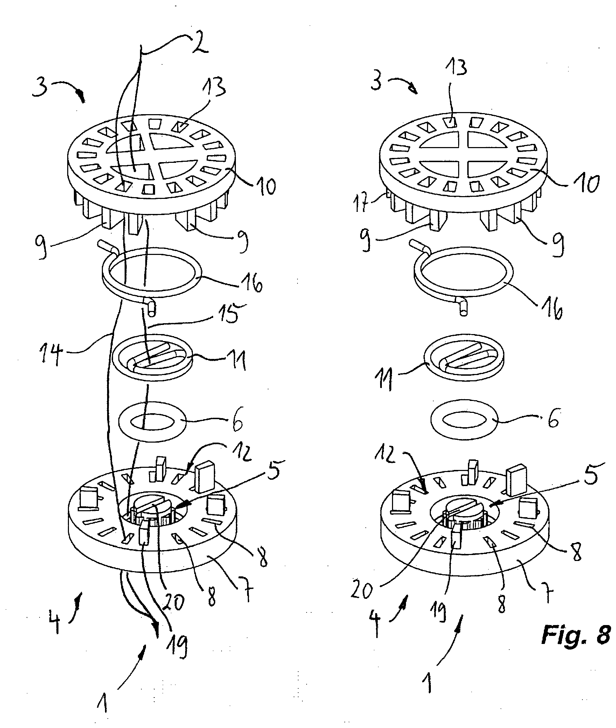

Figuren 7 und 8 zeigen ein weiteres erfindungsgemäßes Ausführungsbeispiel eines sanitären Einbauteils 1. Funktionell und/oder konstruktiv zu den vorangehenden Ausführungsbeispielen gleichartige oder identische Bauteile und Funktionseinheiten sind mit denselben Bezugszeichen bezeichnet und nicht gesondert beschrieben. Die Ausführungen zu den Figuren 1 bis 6 gelten daher zu den Figuren 7 und 8 entsprechend. Die Anordnung der Ansichten entspricht den Figuren 3 und 4.

Das Ausführungsbeispiel gemäß Figuren 7 und 8 unterscheidet sich von den vorangehenden Ausführungsbeispielen dadurch, dass die Antriebseinheit 11 radial innerhalb der Rückstellfeder 16 angeordnet ist. Dies verkürzt die erforderliche axiale Baulänge des sanitären Einbauteils 1.

Die ringfederförmige Antriebseinheit 11 ist jedoch weiterhin koaxial zu der ringfederförmigen Rückstellfeder 16 angeordnet. Die Antriebseinheit 11 ist zwischen einem Mitnahmevorsprung 18 an einer schlitzförmigen Ausnehmung des Abdeckbauteils 10 und einem hier schlitzförmigen Abstützelement 20 des Durchströmbauteils 7 eingesetzt. Die Rückstellfeder 16 ist zwischen einem Mitnahmevorsprung 17 des Abdeckbauteils 10 und einem Abstützelement 19, hier als Abstützvorspung ausgebildet, des Durchströmbauteils 7 eingesetzt und wirkt der Antriebseinheit 11 entgegen.

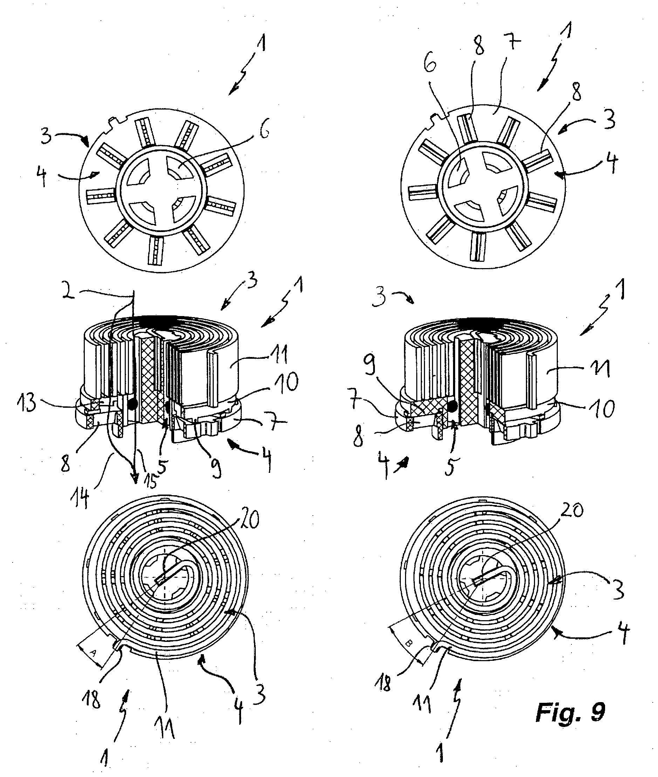

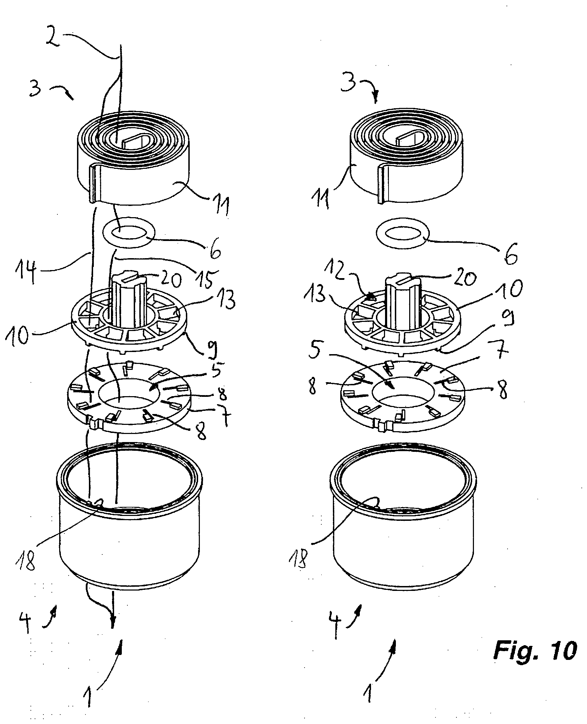

Figur 9 und Figur 10 zeigt ein weiteres erfindungsgemäßes Ausführungsbeispiel eines sanitären Einbauteils 1. Funktionell und/oder konstruktiv zu den vorangehenden Ausführungsbeispielen gleichartige oder identische Bauteile und Funktionseinheiten sind mit denselben Bezugszeichen bezeichnet und nicht gesondert beschrieben. Die Ausführungen zu den Figuren 1 bis 8 gelten daher zu den Figuren 9 und 10 entsprechend. Die Anordnung der Ansichten entspricht den Figuren 3 und 4.

Das Ausführungsbeispiel gemäß Figur 9 und 10 unterscheidet sich von den vorangehenden Ausführungsbeispielen dadurch, dass die Antriebseinheit 11 aus einem Bimetall-Material gefertigt ist. Die Antriebseinheit 11 ist spiralfederförmig und aus einem Bandmaterial gefertigt. Durch die Länge der Aufwicklung ergibt sich ein ausreichender Verstellweg der Verstellbewegung des Durchströmbauteils 7 gegen das Abdeckbauteil 10.

Die Antriebseinheit 11 ist zwischen einem Mitnahmevorsprung 18 einer Axialnut des Abdeckbauteils 10 und einem hier schlitzförmigen Abstützelement 20 des Durchströmbauteils 7 eingesetzt und entwickelt bei Abkühlung selbst eine Rückstellkraft.

Das Ausführungsbeispiel gemäß Figuren 9 und 10 unterscheiden sich von den vorangehenden Ausführungsbeispielen weiter dadurch, dass die Funktionseinheit 5 nicht fest mit dem Durchströmbauteil 7, sondern fest mit dem Abdeckbauteil 10 verbunden ist. Ferner sind die Durchströmöffnungen 8 nicht mit im Verlauf gleichbleibendem Querschnitt ausgebildet, sondern der Querschnitt nimmt vom jeweiligen Abdeckelement 9 weg zu.

Auf diese Weise sind besonders kleine Querschnitte der Durchströmöffnungen 8 an der dem Abdeckelement 9 zugewandten Seite ausbildbar, die besonders einfach verschließbar sind.

Auf diese Weise erreicht das Ausführungsbeispiel gemäß Figuren 9 und 10, dass nur kurze Verstellwege erforderlich sind, um zwischen einer öffnenden Position (linke Zeichnungshälfte) und einer verschließenden Position (rechte Zeichnungshälfte) zu wechseln.

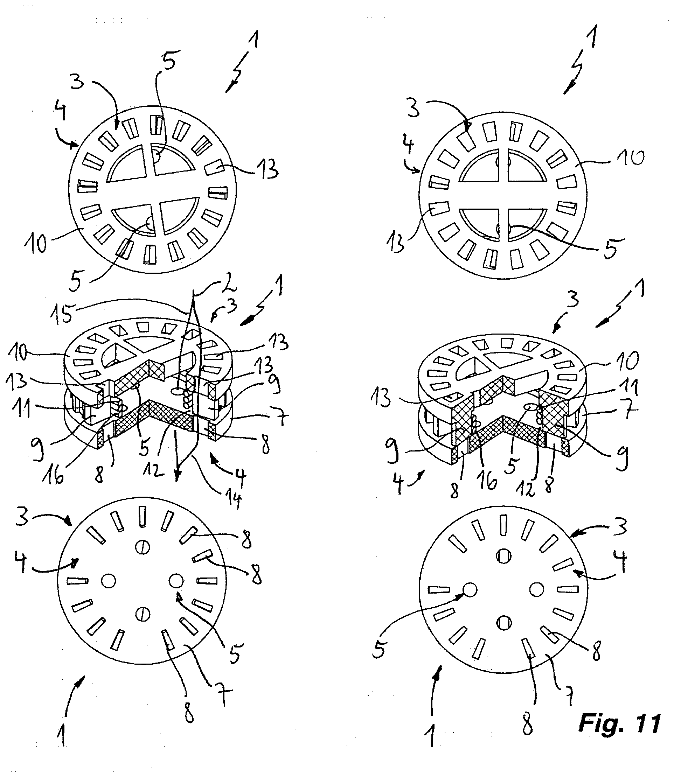

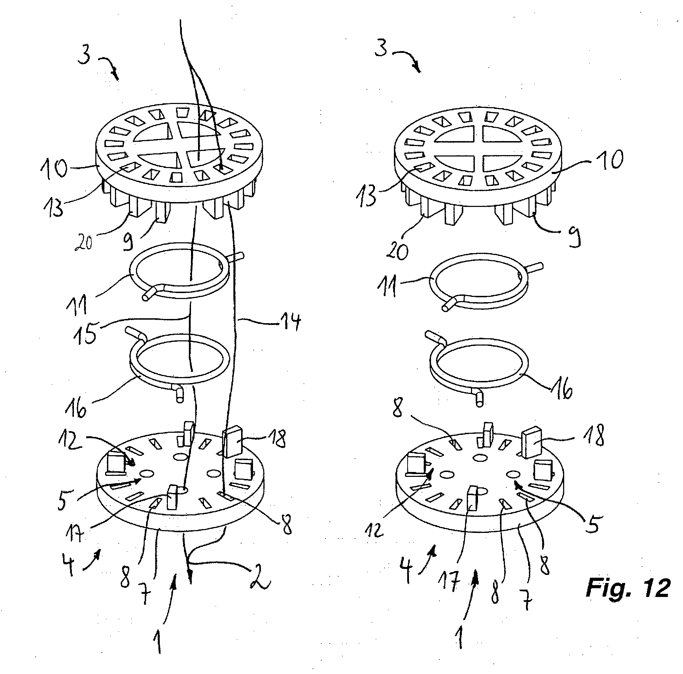

Figuren 11 und 12 zeigen ein weiteres erfindungsgemäßes Ausführungsbeispiel eines sanitären Einbauteils 1 in unterschiedlichen Ansichten. Funktionell und/oder konstruktiv zu den vorangehenden Ausführungsbeispielen gleichartige oder identische Bauteile und Funktionseinheiten sind mit denselben Bezugszeichen bezeichnet und nicht noch einmal gesondert beschrieben. Die Ausführungen zu den Figuren 1 bis 10 gelten daher zu den Figuren 11 und 12 entsprechend. Die Anordnung der Ansichten entspricht den Figuren 5 und 6.

Das Ausführungsbeispiel gemäß Figuren 11 und 12 unterscheidet sich von den vorangehenden Ausführungsbeispielen dadurch, dass die Funktionseinheit 5 als Drossel eingerichtet ist.

Bei den gezeigten Ausführungsbeispielen ist das Abdeckelement 9 jeweils anströmseitig der zugehörigen Durchströmöffnung 8 angeordnet. Bei weiteren Ausführungsbeispielen kann das Abdeckelement 9 abströmseitig der zugehörigen Durchströmöffnung 8 angeordnet sein. Hierbei kann die Antriebseinheit 11 - wie in den vorliegenden Ausführungsbeispielen gezeigt - anströmseitig der Durchströmöffnungen 8 oder abströmseitig der Durchströmöffnungen 8 angeordnet sein.
Den Ausführungsbeispielen ist noch gemeinsam, dass die Antriebseinheit 11 im Hauptströmungsweg 15 der Funktionseinheit 5 angeordnet ist.
Bei dem sanitären Einbauteil 1 wird vorgeschlagen, ein Durchströmbauteil 7 mit wenigstens einer Durchströmöffnung 8 zu versehen, wobei eine temperatursensitive Antriebseinheit 11 an ein der wenigstens einen Durchströmöffnung 8 zugeordnetes Abdeckelement 9 gekoppelt ist, um das Abdeckelement 9 temperaturabhängig zwischen einer die Durchströmöffnung 8 ganz oder teilweise verschließenden und einer die Durchströmöffnung 8 öffnenden Position zu verstellen, wobei der Verstellweg transversal oder quer zu einer Verlaufsrichtung der Durchströmöffnung 8 ausgerichtet ist.

### Bezugszeichenliste

- 1: sanitäres Einbauteil
- 2: Durchströmungsweg
- 3: Anströmseite
- 4: Abströmseite
- 5: Funktionseinheit
- 6: Ring
- 7: Durchströmbauteil
- 8: Durchströmöffnung
- 9: Abdeckelement
- 10: Abdeckbauteil
- 11: temperatursensitive Antriebseinheit
- 12: Aufnahme
- 13: Durchströmgegenöffnung
- 14: Bypass
- 15: Hauptströmungsweg
- 16: Rückstellfeder
- 17, 18: Mitnahmevorsprung
- 19, 20: Abstützelement

## Patentansprüche

1. Sanitäres Einbauteil (1), das einen Durchströmungsweg (2) bildet, in dem eine Funktionseinheit (5) angeordnet ist, die ein Durchströmbauteil (7) hat, welches wenigstens eine Durchströmöffnung (8) aufweist, und wobei im Durchströmungsweg (2) wenigstens ein Abdeckelement (9) angeordnet ist, mit welchem die wenigstens eine Durchströmöffnung (8) wenigstens teilweise verschließbar ist, wobei an das wenigstens eine Abdeckelement (9) eine temperatursensitive Antriebseinheit (11) angekoppelt ist, mit welcher das wenigstens eine Abdeckelement (9) zwischen einer die wenigstens eine Durchströmöffnung (8) öffnenden Position und einer die wenigstens eine Durchströmöffnung (8) zumindest teilweise verschließenden Position verstellbar ist, **wobei** das wenigstens eine Abdeckelement (9) quer zu einer verlaufsrichtung der wenigstens einen Durchströmöffnung (8) verstellbar angeordnet ist, wobei das wenigstens eine Abdeckelement (9) an einem Abdeckbauteil (10) ausgebildet ist, welches relativ zu dem Durchströmbauteil (7) drehbar und/oder verschiebbar gelagert ist, und wobei das Abdeckbauteil (10) wenigstens eine Durchströmgegenöffnung (13) aufweist, welche in der ersten Position mit der wenigstens einen Durchströmöffnung (8) fluchtet und/oder einen Abschnitt des Durchströmungswegs (2) bildet, **dadurch gekennzeichnet, dass** die wenigstens eine Durchströmöffnung (8) und die wenigstens eine Durchströmgegenöffnung (13) in der ersten Position einen Bypass (14) zu einem Hauptströmungsweg (15) der Funktionseinheit (5) bildet.

2. Sanitäres Einbauteil (1) nach Anspruch 1, **dadurch gekennzeichnet, dass** das wenigstens eine Abdeckelement (9) an dem Durchströmbauteil (7) anliegt und/oder abgestützt ist.

3. Sanitäres Einbauteil (1) nach Anspruch 1 oder 2, **dadurch gekennzeichnet, dass** die Antriebseinheit (11) ein temperatursensitives Material, vorzugsweise ein temperaturabhängig formveränderliches Material, besonders vorzugsweise ein Bimetall-Material und/oder ein Material mit Formgedächtnis, hat.

4. Sanitäres Einbauteil (1) nach einem der Ansprüche 1 bis 3, **dadurch gekennzeichnet, dass** die wenigstens eine Durchströmöffnung (8) und/oder die wenigstens eine Durchströmgegenöffnung (13) axial ausgerichtet sind und/oder übereinstimmende Querschnitte aufweisen.

5. Sanitäres Einbauteil (1) nach einem der Ansprüche 1 bis 4, **dadurch gekennzeichnet, dass** ein Anordnungsmuster von Durchströmgegenöffnungen (13) deckungsgleich zu einem Anordnungsmuster von Durchströmöffnungen (12) ausgebildet ist.

6. Sanitäres Einbauteil (1) nach einem der Ansprüche 1 bis 5, **dadurch gekennzeichnet, dass** die wenigstens eine Durchströmöffnung (8) radial außerhalb und/oder radial innerhalb des Hauptströmungswegs (15) der Funktionseinheit (5) angeordnet ist.

7. Sanitäres Einbauteil (1) nach einem der Ansprüche 3 bis 6, **dadurch gekennzeichnet, dass** das temperatursensitive Material der Antriebseinheit (11) in dem Hauptströmungsweg (15) der Funktionseinheit (5) angeordnet ist und/oder ringförmig ausgebildet oder geführt ist.

8. Sanitäres Einbauteil (1) nach einem der Ansprüche 1 bis 7, **dadurch gekennzeichnet, dass** die wenigstens eine Durchströmöffnung (8) als vorzugsweise radial verlaufender Schlitz ausgebildet ist.

9. Sanitäres Einbauteil (1) nach einem der Ansprüche 1 bis 8, **dadurch gekennzeichnet, dass** eine Rückstellfeder (16) vorhanden ist, deren Kraftentwicklung der temperatursensitiven Antriebseinheit (11) entgegengerichtet ist.

10. Sanitäres Einbauteil (1) nach einem der Ansprüche 1 bis 9, **dadurch gekennzeichnet, dass** die oder eine Rückstellfeder (16) als Schraubenfeder oder als Ringfeder oder als Spiralfeder oder als Torsionsfeder ausgebildet ist.

11. Sanitäres Einbauteil (1) nach einem der Ansprüche 1 bis 10, **dadurch gekennzeichnet, dass** das Antriebselement (11) schraubenfederförmig oder ringfederförmig oder spiralfederförmig oder torsionsfederförmig ausgebildet ist.

12. Sanitäres Einbauteil (1) nach einem der Ansprüche 1 bis 11, **dadurch gekennzeichnet, dass** das Durchströmbauteil (8) und/oder das das Abdeckelement aufnehmende Abdeckbauteil (10) platten- oder scheibenförmig ausgebildet ist/sind und/oder dass die Funktionseinheit (5) oder das Abdeckelement (9) fest mit dem Durchströmbauteil (7) verbunden ist.

## Claims

1. Sanitary insert part (1) which forms a through-flow path (2), in which a functional unit (5) is arranged, which has a through-flow component (7) which comprises at least one through-flow opening (8), and wherein in the through-flow path (2) at least one cover element (9) is arranged, by means of which the at least one through-flow opening (8) can be at least partially closed, wherein a temperature-sensitive drive unit (11) is coupled to the at least one cover element (9) and is used to be able to adjust the at least one cover element (9) between a position opening the at least one through-flow opening (8) and a position at least partially closing the at least one through-flow opening (8), wherein the at least one cover element (9) is arranged to be adjustable transverse to an extension direction of the at least one through-flow opening (8), wherein the at least one cover element (9) is formed on a cover component (10) which is mounted to be displaceable and/or rotatable relative to the through-flow component (7), and wherein the cover component (10) comprises at least one through-flow counterpart opening (13) which forms a section of the through-flow path (2) and/or is aligned with the at least one through-flow opening (8) in the first position, **characterised in that** the at least one through-flow opening (8) and the at least one through-flow counterpart opening (13) form in the first position a bypass (14) to a main flow path (15) of the functional unit (5).

2. Sanitary insert part (1) as claimed in claim 1, **characterised in that** the at least one cover element (9) lies against and/or is supported against the through-flow component (7).

3. Sanitary insert part (1) as claimed in claim 1 or 2, **characterised in that** the drive unit (11) has a temperature-sensitive material, preferably a material which changes shape depending upon the temperature, in a particularly preferred manner a bimetal material and/or a material with shape memory.

4. Sanitary insert part (1) as claimed in any one of claims 1 to 3, **characterised in that** the at least one through-flow opening (8) and/or the at least one through-flow counterpart opening (13) are oriented axially and/or have corresponding cross-sections.

5. Sanitary insert part (1) as claimed in any one of claims 1 to 4, **characterised in that** an arrangement pattern of through-flow counterpart openings (13) is congruent with an arrangement pattern of through-flow openings (12).

6. Sanitary insert part (1) as claimed in any one of claims 1 to 5, **characterised in that** the at least one through-flow opening (8) is arranged radially outside and/or radially within the main flow path (15) of the functional unit (5).

7. Sanitary insert part (1) as claimed in any one of claims 3 to 6, **characterised in that** the temperature-sensitive material of the drive unit (11) is arranged in the main flow path (15) of the functional unit (5) and/or is guided or formed in an annular manner.

8. Sanitary insert part (1) as claimed in any one of claims 1 to 7, **characterised in that** the at least one through-flow opening (8) is formed as a preferably radially extending slot.

9. Sanitary insert part (1) as claimed in any one of claims 1 to 8, **characterised in that** a return spring (16) is provided, the force development of which is directed opposite to the temperature-sensitive drive unit (11).

10. Sanitary insert part (1) as claimed in any one of claims 1 to 9, **characterised in that** the or a return spring (16) is formed as a helical spring or as an annular spring or as a spiral spring or as a torsional spring.

11. Sanitary insert part (1) as claimed in any one of claims 1 to 10, **characterised in that** the drive element (11) is formed in the shape of a helical spring or annular spring or spiral spring or torsional spring.

12. Sanitary insert part (1) as claimed in any one of claims 1 to 11, **characterised in that** the through-flow component (8) and/or the cover component (10) receiving the cover element is/are plate-shaped or disc-shaped and/or **in that** the functional unit (5) or the cover element (9) is fixedly connected to the through-flow component (7).

## Revendications

1. Composant sanitaire (1), qui forme un chemin de passage d'écoulement (2), dans lequel est disposée une unité fonctionnelle (5), qui a un composant de passage (7) qui présente au moins une ouverture de passage (8), et dans lequel au moins un élément de recouvrement (9) est disposé dans le chemin de passage d'écoulement (2), avec lequel ladite au moins une ouverture de passage (8) peut être au moins partiellement fermée, dans lequel une unité d'entraînement (11) sensible à la température est couplée audit au moins un élément de recouvrement (9), avec laquelle ledit au moins un élément de recouvrement (9) est déplaçable entre une position ouvrant ladite au moins une ouverture de passage (8) et une position fermant au moins partiellement ladite au moins une ouverture de passage (8), dans lequel ledit au moins un élément de recouvrement (9) est disposé de façon déplaçable transversalement à une direction d'extension de ladite au moins une ouverture de passage (8), dans lequel ledit au moins un élément de recouvrement (9) est formé sur un composant de recouvrement (10), qui peut tourner et/ou se déplacer par rapport au composant de passage (7), et dans lequel le composant de recouvrement (10) présente au moins une ouverture de passage opposée (13), qui dans la première position est alignée avec ladite au moins une ouverture de passage (8) et/ou qui forme une partie du chemin de passage d'écoulement (2), **caractérisé en ce que** ladite au moins une ouverture de passage (8) et ladite au moins une ouverture de passage opposée (13) forment dans la première position un contournement (14) d'un chemin d'écoulement principal (15) de l'unité fonctionnelle (5).

2. Composant sanitaire (1) selon la revendication 1, **caractérisé en ce que** ledit au moins un élément de recouvrement (9) s'applique et/ou est supporté sur le composant de passage (7).

3. Composant sanitaire (1) selon la revendication 1 ou 2, **caractérisé en ce que** l'unité d'entraînement (11) a un matériau sensible à la température, de préférence un matériau changeant de forme en fonction de la température, de préférence encore un matériau bimétallique et/ou un matériau à mémoire de forme.

4. Composant sanitaire (1) selon l'une quelconque des revendications 1 à 3, **caractérisé en ce que** ladite au moins une ouverture de passage (8) et/ou ladite au moins une ouverture de passage opposée (13) sont orientées axialement et/ou présentent des sections transversales qui se correspondent.

5. Composant sanitaire (1) selon l'une quelconque des revendications 1 à 4, **caractérisé en ce qu'**un motif d'agencement d'ouvertures de passage opposées (13) est formé en recouvrement complet d'un motif d'agencement d'ouvertures de passage (12).

6. Composant sanitaire (1) selon l'une quelconque des revendications 1 à 5, **caractérisé en ce que** ladite au moins une ouverture de passage (8) est disposée radialement à l'extérieur et/ou radialement à l'intérieur du chemin d'écoulement principal (15) de l'unité fonctionnelle (5).

7. Composant sanitaire (1) selon l'une quelconque des revendications 3 à 6, **caractérisé en ce que** le matériau de l'unité d'entraînement (11) sensible à la température est disposé dans le chemin d'écoulement principal (15) de l'unité fonctionnelle (5) et/ou est formé ou guidé sous forme annulaire.

8. Composant sanitaire (1) selon l'une quelconque des revendications 1 à 7, **caractérisé en ce que** ladite au moins une ouverture de passage (8) est réalisée sous la forme d'une fente orientée de préférence radialement.

9. Composant sanitaire (1) selon l'une quelconque des revendications 1 à 8, **caractérisé en ce qu'**il se trouve un ressort de rappel (16), dont la force développée est orientée à l'inverse de l'unité d'entraînement sensible à la température (11).

10. Composant sanitaire (1) selon l'une quelconque des revendications 1 à 9, **caractérisé en ce que** le ou un ressort de rappel (16) est constitué par un ressort hélicoïdal ou un ressort annulaire ou un ressort spiral ou un ressort de torsion.

11. Composant sanitaire (1) selon l'une quelconque des revendications 1 à 10, **caractérisé en ce que** l'élément d'entraînement (11) est réalisé en forme de ressort hélicoïdal ou en forme de ressort annulaire ou en forme de ressort spiral ou en forme de ressort de torsion.

12. Composant sanitaire (1) selon l'une quelconque des revendications 1 à 11, **caractérisé en ce que** le composant de passage (8) et/ou le composant de recouvrement (10) contenant l'élément de recouvrement est/sont réalisé(s) en forme de plaque ou de disque et/ou l'unité fonctionnelle (5) ou l'élément de recouvrement (9) est assemblé solidairement au composant de passage (7).
